**Europäisches Patentamt**

**European Patent Office**

**Office européen des brevets**

(19)

(11) Veröffentlichungsnummer: **0 172 415**
**B1**

(12) **EUROPÄISCHE PATENTSCHRIFT**

(45) Veröffentlichungstag der Patentschrift:
**09.12.87**

(51) Int. Cl.⁴: **F 41 H 5/04**, B 32 B 3/26

(21) Anmeldenummer: **85109023.3**

(22) Anmeldetag: **19.07.85**

(54) **Schutzweste oder dergl. gegen ballistische Einwirkungen.**

(30) Priorität: **25.08.84 DE 8425173 U**

(43) Veröffentlichungstag der Anmeldung:
**26.02.86 Patentblatt 86/9**

(45) Bekanntmachung des Hinweises auf die Patenterteilung:
**09.12.87 Patentblatt 87/50**

(84) Benannte Vertragsstaaten:
**AT BE CH DE FR GB IT LI LU NL SE**

(56) Entgegenhaltungen:
**EP - A - 0 083 454**
**BE - A - 542 217**
**FR - A - 2 505 730**
**FR - E - 50 680**
**GB - A - 1 578 351**
**US - A - 2 607 104**
**US - A - 3 519 529**

(73) Patentinhaber: **Akzo GmbH,**
**Postfach 10 01 49 Kasinostrasse 19-23,**
**D-5600 Wuppertal-1 (DE)**

(72) Erfinder: **Droste, Reinhard, Am Eckbusch 24 d,**
**D-5600 Wuppertal 1 (DE)**

ACTORUM AG

## Beschreibung

Die Erfindung betrifft eine Schutzweste oder dgl. gegen ballistische Einwirkungen, bestehend aus mehreren Lagen von textilen Flächengebilden, einem körperseitig angeordneten Schockabsorber und gegebenenfalls einer zusätzlichen Panzerplatte auf der körperabgewandten Seite.

Schutzwesten oder dgl. Schutzbekleidungsstücke sollen den Träger vor Geschosseinwirkungen und z.T. auch vor sonstigen mechanischen Einwirkungen schützen. Der zu schützende Bereich kann sich auf den Oberkörper beschränken (in der Regel Rundumschutz), kann aber auch — in der Regel unter Einschränkung der Beweglichkeit — den Unterleib mitumfassen. Die Schutzweste soll nicht nur das Durchdringen des Geschosses verhindern, sondern auch Verletzungen vermeiden, die durch Impulsübertrag vom Geschoss auf den Körper entstehen können.

In der Zeitschrift MELLIAND TEXTILBERICHTE 6/1981, Seiten 463 bis 468 sind Aufbau und Wirkungsweise geschosshemmender Schutzwesten ausführlich beschrieben. Eine gattungsgemässe Schutzweste ist in der linken Spalte von Seite 464, i.V.m. Bild 4, beschrieben. Rein textile Westen bestehen demnach aus einer grösseren Zahl von übereinandergeschichteten textilen Flächengebilden, beispielsweise Geweben aus Aramidgarnen, und körperseitig ist ein sogenannter «Schockabsorber» angeordnet, der beispielsweise aus Schaumstoff, einem Nadelvlies oder einem flachen Daunenpolster bestehen kann. Dieser «Schockabsorber» hat die Aufgabe, die Stosswirkung des in die Textillagen einschlagenden Geschosses und die vom Auftreffpunkt ausgehenden Stosswellen zu reduzieren. Bei den gepanzerten Schutzwesten ist auf der körperabgewandten Seite eine zusätzliche, meist in eine Tasche einschiebbare Hartmaterialplatte («Panzerplatte») vorgesehen.

Der Schockabsorber hat die Aufgabe, ein Ausbeulen der Textillagen in Richtung der Geschosseinwirkung, d.h. in Richtung des menschlichen Körpers, zu reduzieren. Diese Deformation führt nämlich zum sogenannten «Traumaeffekt», der sich in Verletzungen der Haut und Muskulatur (oberflächliche Hautabschürfungen, Blutergüsse, Blutungen, Gewebequetschungen, Rippenbrüche und Lungenkontusionen) äussert und im Extremfalle zum Tode führen kann.

Weitere Einzelheiten auch zum Thema «Schockabsorber» sind dem Aufsatz «Verhalten von Aramidgeweben bei ballistischen Einwirkungen» in MELLIAND TEXTILBERICHTE 3/1981, Seiten 193 bis 198, insbesondere Seiten 197/198 zu entnehmen.

Die bisher bekannten Schockabsorber, welche einerseits das Gewicht der Schutzweste nicht all zu sehr erhöhen, andererseits nicht zu steif sein sollen, um den textilen Charakter der Schutzweste zu gewährleisten, führen bei Beschuss unter genormten Bedingungen noch immer zu Eindrucktiefen, die den Traumaeffekt nicht weit genug reduzieren können. So führt der Beschuss nach Schutzklasse I der Technischen Richtlinie «Schutzwesten» der Deutschen Polizei (Stand: Juni 1983) mittels 9 mm Para-Weichkern aus der Maschinenpistole auf 26 Lagen Aramidgewebe (Normalausführung) mit einer 12 mm starken Schaumstoffplatte zu einer Eindrucktiefe von mehr als 20 mm.

Aufgabe der vorliegenden Erfindung ist es, eine gattungsgemässe Schutzweste mit Schockabsorber zur Verfügung zu stellen, welche zu einer verringerten Eindrucktiefe und damit zu einer Reduzierung des Traumaeffektes führt. Vorzugsweise soll dabei der textile Charakter der Schutzweste nicht wesentlich beeinträchtigt werden, wenngleich von der bisher üblichen Art der Schockabsorber aus «leicht deformierbaren Materialien» (vgl. MELLIAND 3/1982, 197) abgegangen werden soll.

Diese Aufgabe wird erfindungsgemäss dadurch gelöst, dass der Schockabsorber aus einer Mattenbahn besteht, die aus einer Vielzahl von aus synthetischen Polymeren schmelzgesponnen, sich stellenweise überkreuzenden und an den Kreuzungsstellen miteinander verschweissten Fäden mit einem Durchmesser von 0,2 bis 1,5 mm gebildet ist und ein dreidimensionales Flächengebilde mit waffelähnlich strukturierten Oberflächen, einem Hohlraumanteil von mindestens 90 Vol.-% und einer Dicke von 5 bis 30 Millimeter darstellt.

Zwar ist aus der US-A-3 519 529 ein Mehrschichtgebilde, bestehend aus maximal zwei Lagen von textilen Flächengebilden einer gekräuselten Folie und einer zusätzlichen Folie auf der körperabgewandte Seite, bekannt. Dieses Mehrschichtgebilde wird zum Schutz von Flüssigkeitstanks auch gegen Projektile empfohlen. Dieses Mehrschichtgebilde würde bei einem Einsatz als Schockabsorber einer Schutzweste keine Vorteile gegenüber den oben beschriebenen, bekannten Schutzwesten bieten, weil sie zu keiner verringerten Eindrucktiefe und deshalb auch nicht zu einer Reduzierung des Traumaeffektes führt, wie aus den Fig. 3 und 4 der US-A-3 519 529 leicht erkennbar ist.

Die erfindungsgemäss als Schockabsorber verwendete Mattenbahn an sich sowie deren Herstellung ist in der deutschen Patentschrift DE-C-2 530 499 beschrieben. Das Höckerprofil, auf welches die Fäden ausgesponnen werden, kann dabei eine Höckerdichte aufweisen, die zwischen 9 und 400 Höckern pro Quadratdezimeter liegt, abhängig von der Dicke der Mattenbahn. Die Höcker besitzen eine Höhe von etwa 5 bis 30 mm und weisen die Form von vorzugsweise Pyramidenstümpfen, Kegelstümpfen oder dgl. auf. Weitere Formen sind der US-PS 4 212 692 zu entnehmen. Hierzu gehören auch Matten mit wellenartiger Struktur (a.a.O., Fig. 7).

Als Höckerdichte für den erfindungsgemässen Einsatz als Schockabsorber bei Schutzwesten oder dgl. haben sich zwischen 9 und 1600 Höcker pro Quadratdezimeter bestens bewährt.

Die Erfindung wird anhand der beigefügten Figuren erläutert. Darin sind

Fig. 1 ein Schutzwestenaufbau nach dem Stand der Technik,

Fig. 2 eine erfindungsgemässe Ausführungsform einer Schutzweste.

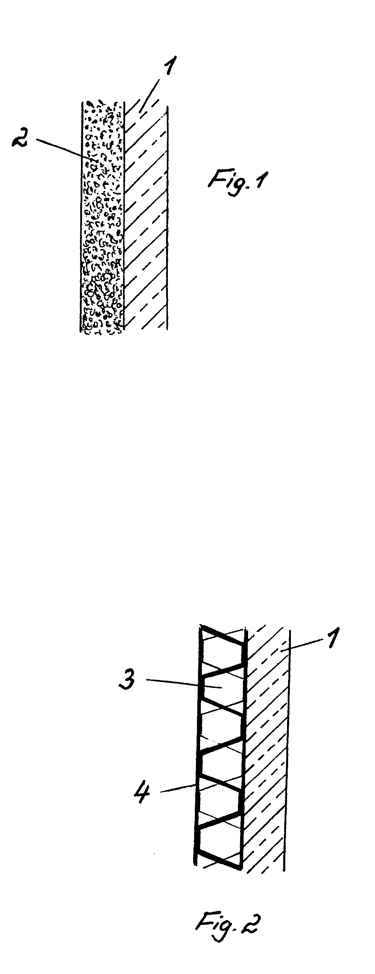

Fig. 1 zeigt einen bekannten Schutzwestenaufbau. Die textile Schicht 1 besteht beispielsweise aus 26 Lagen normaler Aramidgewebe, an der körperseitig eine 12 mm starke Schaumstoffplatte 2 als Schockabsorber befestigt ist.

Fig. 2 zeigt einen erfindungsgemässen Schutzwestenaufbau, wobei die textile Schicht 1 herkömmlicher Art (z.B. wie in Fig. 1) ist. Körperseitig ist eine handelsübliche Drainagematte (Warenzeichen «ENKADRAIN») mit einer Dicke von insgesamt 23 mm angeordnet, die aus einer Mattenbahn 3 gemäss DE-PS 2 530 499 bzw. US-A-4 212 692 mit pyramidenstumpfförmigen Höckern von ca. 20 mm Höhe und einem Spinnvlies 4 besteht. Während die Mattenbahn 3 vorzugsweise aus Polyamid 6 besteht, ist das Spinnvlies 4 vorzugsweise ein Polyestervlies. Bei Beschuss nach Schutzklasse I (vgl. oben) beträgt die Eindrucktiefe bei der Schutzweste gemäss Fig. 2 nur 9 mm, im Vergleich zu 26,5 mm mit einer Schutzweste gemäss Fig. 1 (Stand der Technik).

## Patentansprüche

1. Schutzweste oder dgl. gegen ballistische Einwirkungen, bestehend aus mehreren Lagen von textilen Flächengebilden, einem körperseitig angeordneten Schockabsorber und gegebenenfalls einer zusätzlichen Panzerplatte auf der körperabgewandten Seite, dadurch gekennzeichnet, dass der Schockabsorber aus einer Mattenbahn (3) besteht, die aus einer Vielzahl von aus synthetischen Polymeren schmelzgesponnenen, sich stellenweise überkreuzenden und an den Kreuzungsstellen miteinander verschweissten Fäden mit einem Durchmesser von 0,2 bis 1,5 mm gebildet ist und ein dreidimensionales Flächengebilde (3) mit waffelähnlich strukturierten Oberflächen, einem Hohlraumanteil von mindestens 90 Vol.-% und einer Dicke von 5 bis 30 Millimeter darstellt.

2. Schutzweste nach Anspruch 1, dadurch gekennzeichnet, dass die waffelähnlich strukturierten Oberflächen die Form von Höckern aufweist.

3. Schutzweste nach Anspruch 2, dadurch gekennzeichnet, dass die Höckerdichte zwischen 9 und 1600 pro Quadratdezimeter beträgt.

## Claims

1. Protective vest against ballistic effects, consisting of several layers of textile surface formations, a shock absorber arranged on the body side and if necessary an additional armour plate on the side facing away from the body, characterised in that the shock absorber consists of a mesh track (3) formed from a large number of threads crossing pointwise and fused at the crossing points, and melt spun out of synthetic polymers, of a diameter of 0.2 to 1.5 mm and represents a three-dimensional surface formation (3) with surfaces structured like waffles, and hollow space proportion of 90 Vol.% and a thickness of 5 to 30 millimeters.

2. Protective vest according to claim 1, characterised in that the waffle-like structured surfaces are hump-shaped.

3. Protective vest according to claim 2, characterised in that the thickness of the hump is between 9 and 1600 per square decimeter.

## Revendications

1. Gilet de protection ou similaire, contre les actions balistiques, constitué de plusieurs couches de produits textiles plats, d'un absorbeur de chocs, disposé du côté du corps, et éventuellement d'une plaque supplémentaire de blindage sur le côté externe, caractérisé en ce que l'absorbeur de chocs est constitué d'une bande (3) qui est formée d'un grand nombre de fils en polymère synthétique, filés à l'état fondu, s'entrecroisant par endroits et soudés les uns aux autres aux points de croisements, et présentant un diamètre de 0,2 à 1,5 mm, et en ce qu'il représente un produit plat tridimensionnel (3) dont la surface est structurée de façon analogue à un gaufrage, et qui présente une proportion d'espace vide d'au moins 90% en volume et une épaisseur de 5 à 30%.

2. Gilet de protection selon la revendication 1, caractérisé en ce que la surface structurée de façon analogue à un gaufrage présente la forme de bosses.

3. Gilet de protection selon la revendication 2, caractérisé en ce que la densité de bosses est comprise entre 9 et 1600 par décimètre carré.

Fig.1

Fig.2